## Europäisches Patentamt

## European Patent Office

## Office européen des brevets

(19)

(11) Publication number: **0 151 338**
**B1**

(12) **EUROPEAN PATENT SPECIFICATION**

(45) Date of publication of patent specification: **25.05.88**

(51) Int. Cl.⁴: **F 16 D 3/14**, F 16 D 13/38, B 60 K 17/02

(21) Application number: **84307651.4**

(22) Date of filing: **06.11.84**

(54) Clutch plate assembly.

(30) Priority: **30.11.83 US 556517**

(43) Date of publication of application:
**14.08.85 Bulletin 85/33**

(45) Publication of the grant of the patent:
**25.05.88 Bulletin 88/21**

(84) Designated Contracting States:
**DE FR GB IT SE**

(56) References cited:
**AU-B-3 349 468**
**DE-A-2 738 861**
**DE-B-2 318 908**
**GB-A-1 441 688**
**GB-A-2 078 906**

(73) Proprietor: **BORG-WARNER CORPORATION**
**200 South Michigan Avenue**
**Chicago Illinois 60604 (US)**

(72) Inventor: **Lech, Thaddeus, Jr.**
**23800 Middlebelt Road Apt. 1**
**Farmington Hills Michigan 48024 (US)**

(74) Representative: **Allden, Thomas Stanley et al**
**A.A. THORNTON & CO. Northumberland House**
**303-306 High Holborn**
**London WC1V 7LE (GB)**

Courier Press, Leamington Spa, England.

## Description

This invention relates to a clutch damper assembly.

In a conventional friction clutch for the drive train of an automotive vehicle, the engine has power and inertia impulses which drive the engaged clutch with an irregular series of thrusts when the transmission is in neutral and the engine is at idle rpm. These impulses will be transmitted through the input shaft to the transmission gears which become excited, resulting in oscillation through their backlash space to produce objectionable rattle.

There is generally disclosed in GB—A—2078906 (Figures 21 to 25) a clutch damper assembly for an automotive vehicle clutch; the clutch damper assembly comprising a multi-part hub assembly having an inner hub with an axially splined opening for receiving an externally axially splined transmission input shaft, an outer hub having first means interengaging with second means on the inner hub to cause axial movement of the inner hub against the bias of compression springs upon rotation of the outer hub relative to the inner hub, and a radial flange with equally spaced spring windows therein; the clutch damper assembly further comprising a clutch plate carrying friction facings at the outer periphery thereof, a spring retainer plate secured to the clutch plate to sandwhich the radial flange therebetween, the clutch and spring retainer plates having circuferentially spaced windows therein axially aligned with the spring windows in the radial flange, and damper springs received in each set of axially aligned spring windows in the clutch and spring retainer plates and the radial flange.

More particularly, in the aforesaid generally disclosed clutch damper assembly, the radial flange is integral with the outer hub, the first means comprises internal helical teeth on the outer hub, and the seond means comprises external helical teeth on the inner hub interengaging with the external helical teeth. Such a construction is operable to dissipate the engine impulses occurring when the transmission is in neutral and the engine is idling. At that time, with the clutch engaged, the engine impulses act to rotate the clutch and spring retainer plates and via the damper springs and radial flange also the outer hub. Because of the helical connection between the outer and inner hubs, such rotation of the outer hub wil not cause rotation of the inner hub and hence the transmission input shaft but, rather, the inner hub will move axially along the input shaft, by which to dissipate the engine impulses.

The aforesaid particularly disclosed clutch damper assembly of GB—A—2078906 represents one approach to the problem of dissipating engine impulses.

Another solution to such problem is provided by the present invention as claimed in which the aforesaid generally disclosed clutch damper assembly is characterised by the provision of a second inner hub whose hub barrel has an internally axially splined opening for receiving the transmission shaft, the compression springs bias the first mentioned and second inner hubs apart, the radial flange is integral with the hub barrel of the second inner hub, the spring windows in the radial flange extend circumferentially beyond the spring windows in the clutch and spring retainer plates to allow a limited rotation of the clutch and spring retainer plates and damper springs relative to the second inner hub without compression of the damper springs, the outer hub comprises a ramp member journalled within the clutch plate, the first-mentioned inner hub comprises a cam member, the ramp member has a radial flange with peripheral notches receiving the damper springs so that rotation of the plates and damper springs relative to the second inner hub causes rotation of the ramp member relative to the cam member, the first means comprises a series of camming surfaces on the ramp member, and the second means comprises complementary camming surfaces on the cam member engaging the camming surfaces on the ramp member to cause axial movement of the cam member upon rotation of the ramp member relative thereto.

Again, therefore, when the transmission is in neutral and the engine is idling, rotation of the ramp member forming the outer hub will cause it to rotate relative to the cam member forming the first inner hub and hence cause the cam member to move axially along the transmission input shaft rather than rotate the shaft, with the result that the engine impulses become dissipated in a first-stage operation of the clutch damper assembly. It is not until the lost motion provided by the circumferentially oversized peripheral notches in the second inner hub is taken up that the damper springs rotated with the clutch and retainer plates will, in a second stage operation of the clutch damper assembly, cause concomittant rotation of the second inner hub with consequential rotation of the transmission input shaft.

In order that the invention may be well understood there will now be described an embodiment thereof, given by way of example, reference being had to the accompanying drawings, in which:

Figure 1 is a rear elevational view of a clutch damper assembly embodying the present invention;

Figure 2 is a cross sectional view of the same assembly taken on the irregular line 2—2 of Figure 1;

Figure 3 is a partial rear elevational view of the same clutch damper assembly with the spring retainer plate and hub broken away;

Figure 4 is an enlarged partial cross sectional view of the cam and ramp assembly of the same clutch damper assembly taken on the irregular line 4—4 of Figure 3;

Figure 5 is an enlarged rear elevational view of the ramp member of the same clutch damper assembly;

Figure 6 is a cross sectional view taken on the irregular line 6—6 of Figure 5;

Figure 7 is a rear elevational view of the cam member of the same clutch damper assembly;

Figure 8 is a cross sectional view taken on the irregular line 8—8 of Figure 7;

Figure 9 is a top plan view of the same cam member;

Figure 10 is a front elevational view of the same cam member;

Figure 11 is a rear elevation view of the spring retainer plate of the same clutch damper assembly;

Figure 12 is a rear elevational view of a bushing keyed to the same spring retainer plate;

Figure 13 is a cross sectional view taken on the irregular line 13—13 of Figure 12;

Figure 14 is a rear elevational view of a main hub for the same clutch damper assembly;

Figure 15 is a cross sectional view taken on the irregular line 15—15 of Figure 14;

Figure 16 is a front elevational view of the clutch driven of the same clutch damper assembly; and

Figure 17 is an enlarged cross sectional view taken on the irregular line 17—17 of Figure 16.

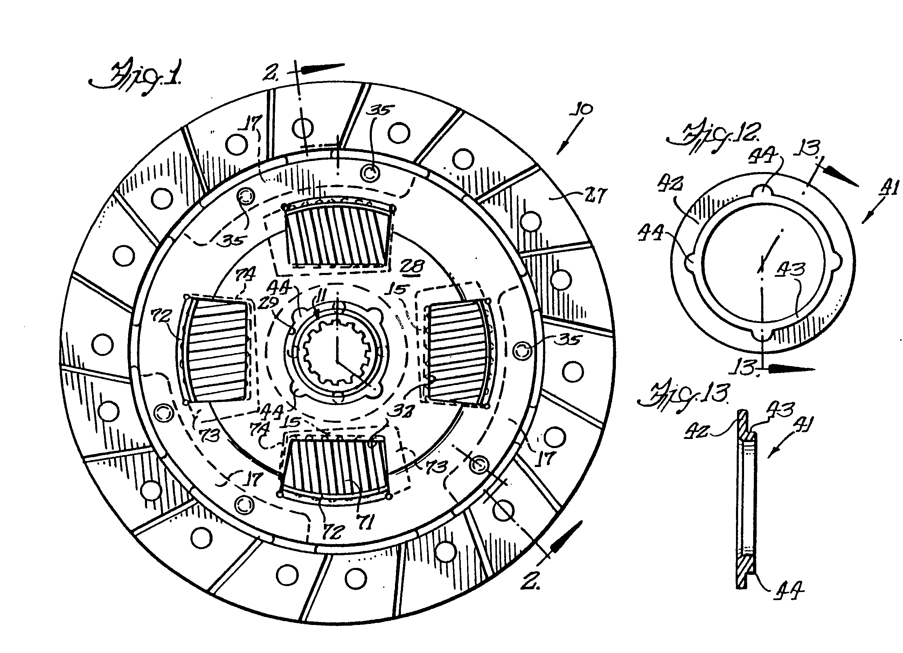

Referring first to Figures 1 to 3, a clutch damper assembly 10 includes a main or second inner hub 11, a clutch plate 18 carrying friction facings 27 mounted on the periphery thereof and adapted to be positioned between friction surfaces of a flywheel and a pressure plate (not shown) for the vehicle clutch, and a spring retainer plate 28. The main hub 11 (Figures 14 and 15) includes a barrel 12 with a splined central opening 13 receiving the splined end of a transmission input shaft (not shown) and an integral radial flange 14 having a plurality of circumferentially equally spaced arcuate spring windows 15 and terminating in a periphery 16 with three circumferentially equally spaced elongated notches 17.

The clutch driven plate 18 (Figures 16 and 17) has a central opening 19, a plurality of circumferentially equally spaced spring windows 21, and an inwardly offset outer periphery 22 containing a plurality of openings 23 and 24 arranged in a circle; the openings 23 receiving rivets 25 to secure cushioning plates 26 carrying the opposed friction facings 27 for the clutch.

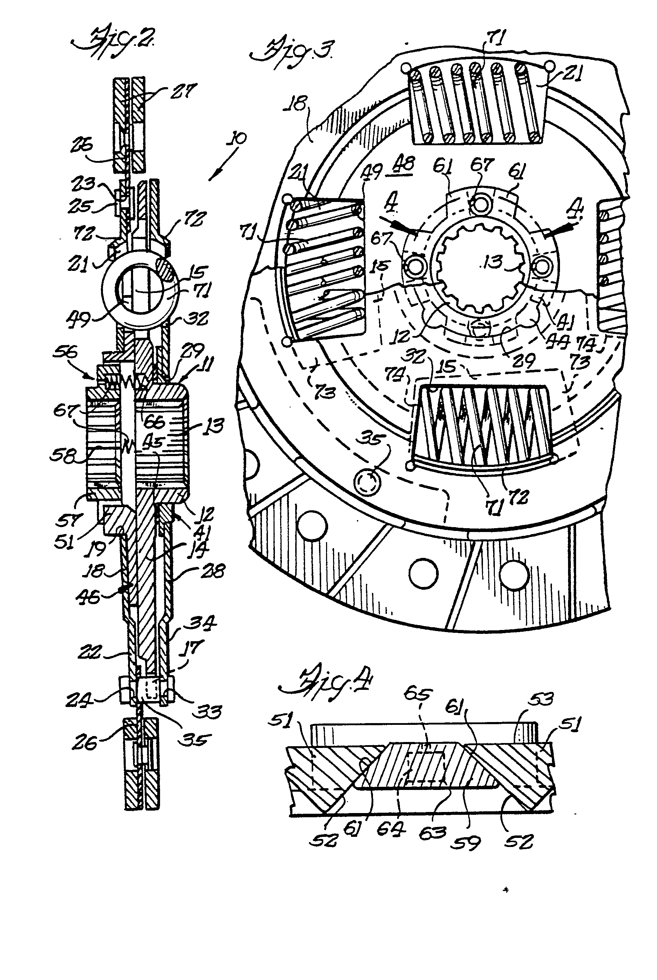

The spring retainer plate 28 (Figures 2 and 11) has a central opening 29 with four circumferentially equally spaced notches 31 therein, a plurality of circumferentially equally spaced arcuate spring windows 32 axially aligned with the windows 15 and 21 of the main hub 11 and the clutch driven plate 18, respectively, and a plurality of openings 33 in the inwardly offset periphery 34 axially aligned with the openings 24 to receive spacer rivets 35 to secure the clutch plate 18 and spring retainer plate 28 together; the rivets extending through the elongated notches 17 in the main hub flange periphery.

Positioned on the main hub barrel 12 is a spacer ring or bearing bushing 41 (Figures 12 and 13) having a radial flange 42 integral with an axial sleeve 43. Four axially extending ribs 44 are formed integral with the sleeve to be received in the notches 31 in the spring retainer plate 28, so that the main hub 11 is piloted concentric in the assembly by the bushing 41. The bushing or spacer 41 may be formed of a suitable plastics material and, as seen in Figure 2, a friction washer 45 may be located between the hub flange 14 and the bushing flange 42 if additional frictional lag force is desired.

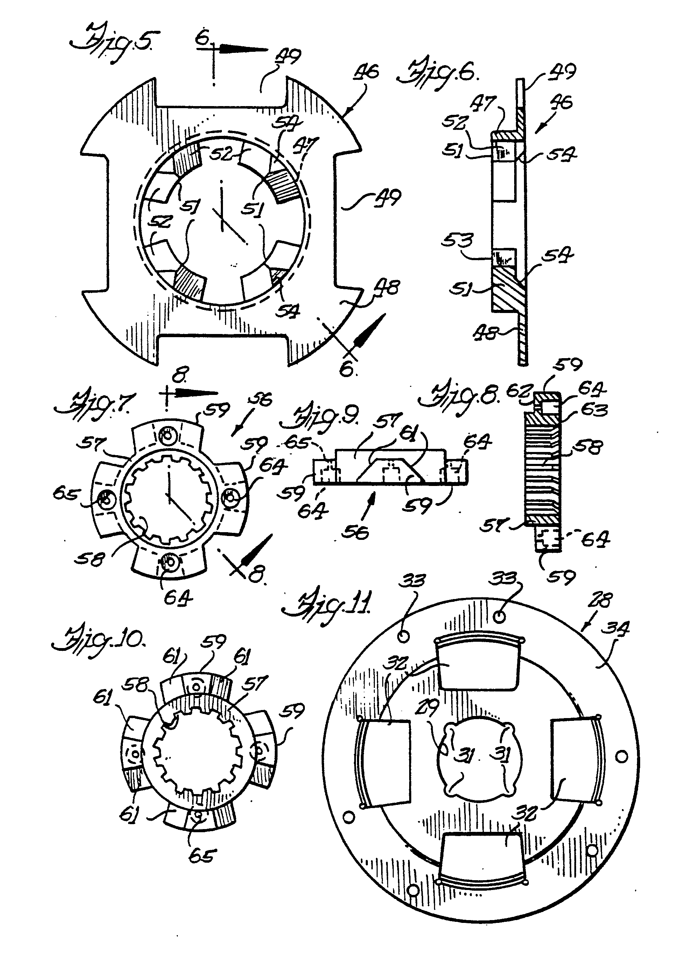

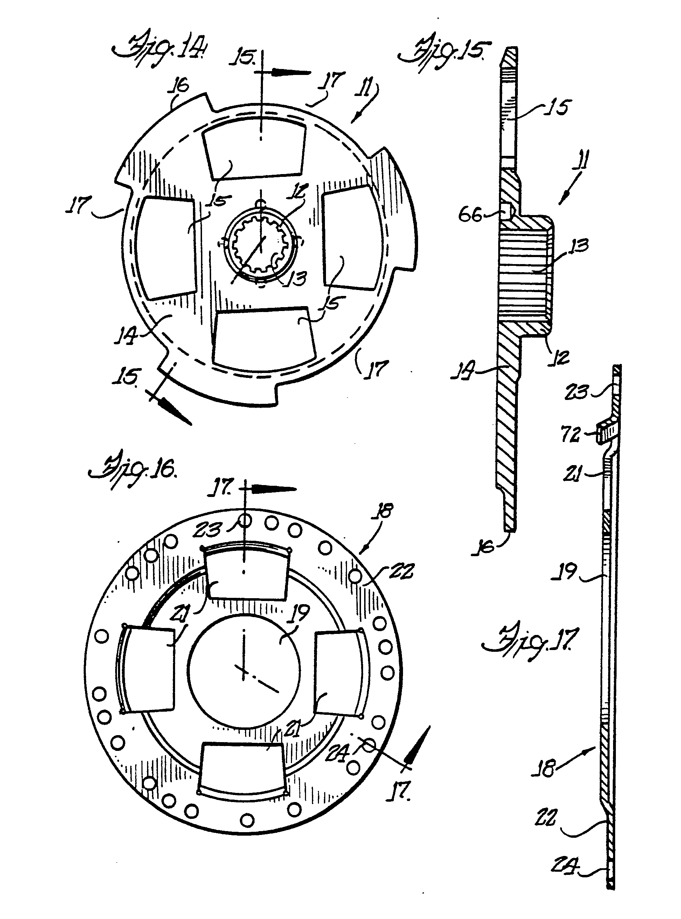

An outer hub formed by a ramp member 46 is positioned on the opposite side of the main hub flange 14 between the driven plate 18 and that flange. The ramp member 46 (Figures 4, 5 and 6) includes a generally cylindrical sleeve or barrel 47 with an integral radial flange 48 having four circumferentially equally spaced peripheral notches 49 which are of a length equal to and adapted to be axially aligned with the spring windows in the plates 18 and 28. Formed in the sleeve or barrel 47 of the ramp member 46 are four circumferentially equally spaced radially inwardly extending projections 51, each having a pair of oppositely disposed 45° inclined ramp surfaces 52, 52 converging from the front surface 53 of the member to terminate short of the flange in an outwardly inclined end surface 54.

Located generally concentrically within the ramp member 46 is an axially reciprocable first inner hub in the form of a cam member 56 (Figures 7 through 10) including a cylindrical body or barrel 57 with a central splined opening 58 also receiving the splined end of the transmission input shaft. Extending radially outwardly from the barrel 57 are four circumferentially equally spaced projections 59 having oppositely disposed 45° inclined ramps or camming surface 61, 61 with the projections being complementarily received between the projections 51 on the ramp member 46; the ramp surfaces 61, 61 converging toward the front 62 of the cam member. In the rear surface 63 of each cam projection 59 is a spring recess 64 terminating in a small opening 65 extending through the projection.

Also, four spring recesses 66 are formed in the hub 11 facing and axially aligned with the recesses 64 to receive the ends of compression springs 67. These springs serve the dual function of normally biasing the main hub 11 and the cam member 56 apart limited by the coacting projections 51, 59, and of aligning the splines in the central openings 13 and 58 of the main hub barrel 12 and the cam barrel 57, respectively.

One or more concentric damper springs 71 are located in each aligned set of spring windows 21, 15 and 32 in the plates 18, 28 and the main hub flange 14, with the plate windows 21 and 32 having inclined outer lips 72 to retain the damper springs in operative position. As seen in Figures 1 and 3, the spring windows 15 in the main hub flange 14 are enlarged relative to the clutch and spring retainer plate windows 21, 32 in the drive direction at 73 and by a smaller amount in the coast direction at 74. The function of the enlarged windows 15 will become more apparent when considering operation of the assembly. Also, the springs 67 are 90° out of plane with the normal dammer springs 71 to break up harmonic influence and resonance by changing the plane of motion.

In the normal position of the multi-part hub assembly with the clutch disengaged, as seen in Figure 1, the bushing 41 is keyed to the spring retainer plate 28 and the damper springs 71 are positioned in the notches 49 of the ramp member 46 in an uncompressed state. Also, the springs 67 urge the cam member 56 forwardly away from the hub member 11 with the ramps 52, 52 and 61, 61 being fully engaged as seen in Figure 4. This clutch damper assembly operates in the same manner as a conventional assembly except for the action of the ramp member 46 and cam member 56 at idle rpm and in neutral transmission position. With the clutch engaged between the flywheel and pressure plate, the engine impulses during idle act to rotate the clutch plate 18, spring retainer plate 28 and damper springs 71 relative to the main hub 11 due to the enlarged portion 73 of the spring windows 15, which springs in turn rotate the ramp member 46 to urge the cam member 56 axially rearwardly on the transmission input shaft against the force of the compression springs 67 due to the interaction of the ramp surfaces 52, 61. This movement continues until the damper springs 71 strike the ends of the enlarged portion of the main hub flange spring windows 15. The energy of the impulses is used to actuate the cam member 56 in the above manner rather than transmit the undiminished impulses to the vehicle transmission to cause its gears to rattle.

In the normal driving mode of the vehicle, the main hub 11 rest against the damper springs 71 to compress them upon torque application to the friction facings, which loosens the ramp member 46 so that it no longer drives the cam member 56. This action reduces wear on the ramp surfaces 52, 61 by allowing them not to operate during the normal driving mode when their action is not required. The rest of the assembly operates in a conventional manner.

**Claims**

1. A clutch damper assembly for an automotive vehicle clutch; the clutch damper assembly comprising a multi-part hub assembly (11, 46, 56) having an inner hub (56) with an axially splined opening (58) for receiving an externally axially splined transmission input shaft, an outer hub (46) having first means (52) interengaging with second means (61) on the inner hub to cause axial movement of the inner hub against the bias of compression springs (67) upon rotation of the outer hub relative to the inner hub, and a radial flange (14) with equally spaced spring windows (15) therein; the clutch damper assembly further comprising a clutch plate (18) carrying friction facings (27) at the outer periphery thereof, a spring retainer plate (28) secured to the clutch plate to sandwich the radial flange therebetween, the clutch and spring retainer plates having circumferentially spaced windows (21, 32) therein axially aligned with the spring windows in the radial flange, and damper springs (71) received in each set of axially aligned spring windows in the clutch and spring retainer plates and the radial flange; characterised by the provision of a second inner hub (11) whose hub barrel (12) has an internally axially splined opening (13) for receiving the transmission shaft, the compression springs bias the first mentioned and second inner hubs apart, the radial flange integral with the hub barrel of the second inner hub, the spring windows in the radial flange extend circumferentially beyond the spring windows in the clutch and spring retainer plates to allow a limited rotation of the clutch and spring retainer plates and damper springs relative to the second inner hub without compression of the damper springs, the outer hub comprises a ramp member (46) journalled within the clutch plate, the first-mentioned inner hub comprises a cam member (56), the ramp member (46) has a radial flange (48) with peripheral notches (49) receiving the damper springs so that rotation of the plates and damper springs relative to the second inner hub causes rotation of the ramp member relative to the cam member, the first means comprises a series of camming surfaces (52) on the ramp member, and the second means comprises complementary camming surfaces (61) on the cam member engaging the camming surfaces on the ramp member to cause axial movement of the cam member upon rotation of the ramp member relative thereto.

2. A clutch damper assembly as claimed in claim 1, wherein the cam member (56) has circumferentially spaced recesses (64) facing the second inner hub (11), the second inner hub has recesses (66) axially aligned with the cam member recesses, and the compression springs (67) are each received in each aligned pair of facing recesses to bias the cam member away from the second inner hub.

3. A clutch damper assembly as claimed in claim 1 or claim 2, wherein the ramp member (46) has inner projections (51) with the camming surfaces (52) thereon, and the cam member (56) has outer projections (59) with the camming surfaces (61) thereon.

4. A clutch damper assembly as claimed in any of the preceding claims, wherein the camming surface (52, 61) are 45° inclined surfaces.

5. A clutch damper assembly as claimed in any of the preceding claims, wherein the spring windows (15) in the radial flange (14) of the second inner hub (11) are enlarged for approximately 8° travel (73) in the drive direction and approximately 1° travel (74) in the coast direction.

6. A clutch damper assembly as claimed in any of the preceding claims, including an annular spacer (41) positioned between the second inner hub (11) and the spring retainer plate (28), the spring retainer plate having spaced notches (31) accommodating ribs (44) formed on the spacer.

## Patentansprüche

1. Kupplungsdämpferanordnung für eine Kraftfahrzeugkupplung, mit einer mehrteiligen Nabenanordnung (11, 46, 56) mit einer inneren Nabe (56) mit einer axial verkeilten Öffnung (58) zum Aufnehmen einer außen axial verkeilten Getriebeeingangswelle, einer äßeren Nabe (46) mit ersten Mitteln (52), die in zweite Mittel (61) an der ·inneren Nabe eingreifen, um einen Axialbewegung der inneren Nable entgegen der Vorspannung von Druckfedern (67) hervorzurufen, wenn sich die aüußere Nabe bezüglich der inneren Nabe dreht, und einem radialen Flansch (14), in dem mit gleichem Abstand angeordnete Federfenster (15) vorgesehen sind, einer Kupplungsscheibe (18), die an ihrem Außenumfang Reibbeläge (27) trägt, einer Federhaltescheibe (28), die an der Kupplungscheibe befestigt ist, um den radialen Flansch dazwischen einzuklemmen, wobei die Kupplungs- und Federhaltescheibe in Umfangsrichtung beabstandete Fenster (21, 32) aufweisen, die mit den Federfenstern in dem radialen Flansch axial ausgerichtet sind, und Dämpferfedern (71), die in jedem Satz von axial ausgerichteten Federfenstern in der Kupplungs- und Federhaltescheibe und dem radialen Flansch aufgenommen sind, dadurch gekennzeichnet, daß eine zweite innere Nabe (11) vorgesehen ist, deren Nabentrommel (12) eine innen axial verkeilte Öffnung (13) zum Aufnehmen der Getriebewelle besitzt, daß die Druckfedern die erstgenannten Naben und die zweite innere Nabe voneinander weg vorspannen, daß der radiale Flansch einstückig mit der Nabentrommel der zweiten inneren Nabe ausgebildet ist, daß die Federfenster in dem radialen Flansch in Umfangsrichtung über die Federfenster in der Kupplungs- und Federhaltescheibe hinaus verlaufen, um eine begrenzte Drehung der Kupplungs- und Federhaltescheibe und der Dämpferfedern bezüglich der zweiten inneren Nabe zuzulassen, ohne daß die Dämpferfedern zusammengedrückt werden, daß die äußere Nabe ein Rampenteil (46) aufweist, das in der Kupplüngsscheibe drehbar gelagert ist, daß die erstgenannte innere Nabe einen Nocken (56) enthält, daß das Rampenteil (46) einen radialen Flansch (48) mit Umfangsnuten (49) zum Aufnehmen der Dämpferfedern besitzt, so daß eine Drehung der Scheiben und Dämpferfedern bezüglich der zweiten inneren Nabe eine Drehung des Rampenteils bezüglich des Nockens verursacht, daß die ersten Mittel einen Anzahl von Nockenflächen (52) an dem Rampenteil aufweisen und daß die zweiten Mittel komplementäre Nockenflächen (61) am Nocken aufweisen, die die Nockenflächen am Rampenteil erfassen, um einen Axialbewegung des Nockens hervorzurufen, wenn sich das Rampenteil bezüglich des Nockens dreht.

2. Anordnung nach Anspruch 1, dadurch gekennzeichnet, daß der Nocken (56) in Umfangsrichtung beabstandete Ausnehmungen (64) besitzt, die der zweiten inneren Nabe (11) zugewandt sind, daß die zweite innere Nabe Ausnehmungen (66) besitzt, die mit den Nockenausnehmungen axial ausgerichtet sind, und daß die Druckfedern (67) jeweils in einem fluchtenden zugewanden Ausnehmungspaar aufgenommen sind, um den Nocken von der zweiten inneren Nabe weg vorzuspannen.

3. Anordnung nach Anspruch 1 oder 2, dadurch gekennzeichnet, daß das Rampenteil (46) innere Vorsprünge (51) aufweist, auf denen die Nockenflächen (52) vorgesehen sind, und daß der Nocken (56) äußere Vorsprünge (59) aufweist, auf denen die Nockenflächen (61) vorgesehen sind.

4. Anordnung nach einem der vorhergehenden Ansprüche, dadurch gekennzeichnet, daß die Nockenflächen (52, 61) Flächen mit einem Neigungswinkel von 45° sind.

5. Anordnung nach einem der vorhergehenden Ansprüche, dadurch gekennzeichnet, daß die Federfenster (15) in dem radialen Flansch (14) der zweiten inneren Nabe (11) vergrößert sind, un eine ungefähr 8°-ige Bewegung (73) in Fahrtrichtung und eine ungefähr 1°-ige Bewegung (74) in Leerlaufrichtung ausführen zu können.

6. Anordnung nach einem der vorhergehenden Ansprüche, gekennzeichnet durch einen ringförmigen Abstandshalter (41), der zwischen der zweiten inneren Nabe (11) und der Federhaltescheibe (28) positioniert ist, wobei die Federhaltescheibe beabstandete Nuten (31) zur Aufnahme von am Abstandshalter angeformten Rippen (44) aufweist.

## Revendications

1. Amortisseur assemblé pour un embrayage de véhicule automobile, cet ensemble comportant un moyeu assemblé multi-parties (11, 46, 56) présentant un moyeu intérieur (56) avec une ouverture cannelée axialement (58) pour recevoir un arbre d'entrée d'une transmission cannelé extérieurement axialement, un moyeu extérieur (46) comportant un premier moyen (52) s'interengageant avec un second moyen (61) sur le moyeu intérieur pour provoquer un déplacement axial du moyeu intérieur à l'encontre de la sollicitation de ressorts de compression (67) lors de la rotation du moyeu extérieur par rapport au moyeu intérieur, et un flasque radial (14) dans lequel sont ménagées des fenétres (15) pour ressort espacées de la même distance; l'amortisseur assemblé d'embrayage comportant en outre une plaque d'embrayage (18) portant des garnitures de friction (27) à sa périphérie extérieure, une plaque (28) de retenue de ressort fixée à la plaque d'embrayage pour enfermer le flasque radial entre elles, les plaques d'emgrayage et de retenue de ressort présentant des fenêtres espacées circonférentiellement (21, 32) alignées axialement avec les fenêtres pour ressort du flasque radial, et des ressorts (71) d'amortisseur reçus dans chaque jeu d'ouvertures alignées axialement pour ressort des plaques d'embrayage et de retenue de ressort et du flasque radial; caractérisé par la fourniture d'un second moyeu intérieur (11) dont le cylindre (12) comporte une ouverture (13) cannelée intérieurement axialement afin de recevoir l'arbre de la transmission, les ressorts de compression sollicitent pour les écarter le moyeu cité en premier et le second moyeu intérieur, le flasque radial est en une pièce avec le cylindre du second moyeu intérieur, les fenêtres pour ressort ménagées dans le flasque radial s'étendent circonfériellement au-delà des fenêtres pour ressort des plaques d'embrayage et de retenue de ressort afin de permettre une rotation limitée des plaques d'embrayage et de retenue de ressort et des ressorts d'amortisseur par rapport au second moyeu intérieur sans compression des ressorts d'amortisseur, le moyeu extérieur comprend un élément de rampe (46) monté à l'intérieur de la plaque d'embrayage, le moyeu intérieur cité en premier comprend un élément de came (56), l'élément de rampe (46) comporte un flasque radial (48) avec des encoches péripheriques (49) recevant les ressorts d'amortisseur de sorte que la rotation des plaques et des ressorts d'amortisseur par rapport au seceond moyeu intérieur provoque la rotation de l'élément de rampe par rapport à l'élément de came, le premier moyen comprend une série de surfaces à effect de came (52) sur l'élément de rampe, et le second moyen comprend des surfaces complémentaires à effet de came (61) sur l'élément de came en contact avec les surfaces à effet de came de l'élément de rampe pour provoquer un déplacement axial de l'élément de came lors de la rotation de l'élément de rampe rapport à lui.

2. Amortisseur assemblé d'embrayage selon la revendication 1, dans lequel l'élément de came (56) comporte des évidements espacés circonférentiellement (64) en regard du second moyeu intérieur (11), le second moyeu intérieur comporte des évidements (66) alignés axialement avec les évidements de l'élément de came, et les ressorts de compression (67) sont chacun reçus dans chaque paire en alignement d'évidements en regard de manière à solliciter l'élément de came pour l'éloigner du second moyen intérieur.

3. Amortisseur assemblé d'embrayage selon la revendication 1 ou la revendication 2, dans lequel l'élément de rampe (46) comporte des saillies intérieures (51) avec sur leur dessus des surfaces à effet de came (52), et l'élément de came (56) présente des saillies extérieures (59) avec sur leur dessus des surfaces à effet de came (61).

4. Amortisseur assemblé d'embrayage selon l'une quelconque des revendications précédentes, dans lequel les surfaces à effet de came (52, 61) sont des surfaces inclinées à 45°.

5. Amortisseur assemblé d'embrayage selon l'une quelconque des revendications précédentes, dans lequel les fenêtres (15) pour ressort ménagées dans le flasque radial (14) du second moyeu intérieur (11) sont agrandies pour une course (73) d'environ 8° dans la direction d'entraînement et une course (74) d'environ 1° dans la direction de la marche par inertie.

6. Amortisseur assemblé d'embrayage selon l'une quelconque des revendications précédentes, comportant une entretoise annulaire (41) placée entre le second moyeu intérieur (11) et la plaque de retenue de ressort (28), la plaque de retenue de ressort présentant des encoches espacées les unes des autres (31) recevant des nervures (44) formées sur l'entretoise.

Fig. 12

Fig. 13

Fig. 1

Fig.2.

Fig.3.

Fig.4.

2

Fig.5. Fig.6. Fig.7. Fig.8. Fig.9. Fig.10. Fig.11.

*Fig. 14.*

*Fig. 15.*

*Fig. 16.*

*Fig. 17.*